# EUROPÄISCHE PATENTANMELDUNG

(11) **EP 3 648 196 A2**
(43) Veröffentlichungstag der Anmeldung: **06.05.2020**
(21) Anmeldenummer: 19205167.0
(22) Anmeldetag: 24.10.2019
(51) Int. Cl.: H01M 2/14, H01M 2/16, H01M 4/04, C25B 1/00, H01M 4/38, H01M 10/052

(54) **VORRICHTUNG ZUR ELEKTROCHEMISCHEN BEARBEITUNG VON KOMPONENTEN FÜR BATTERIEZELLEN, VERFAHREN ZUM BETRIEB DERSELBEN SOWIE DEREN VERWENDUNG**

(30) Priorität: 31.10.2018 DE 102018218583
(71) Anmelder: Robert Bosch GmbH, 70442 Stuttgart (DE)
(72) Erfinder: Berner, Ulrich, 70176 Stuttgart (DE); Gallagher, Kevin Gregory, 85221 Dachau (DE); Widmann, Kevin, 71332 Waiblingen (DE)

(57) **Zusammenfassung**

Es wird eine Vorrichtung zur elektrochemischen Bearbeitung, insbesondere Trocknung von Komponenten für Batteriezellen in Form einer Elektrode, eines Separators oder einer Kombination derselben, umfassend eine Aufnahmevorrichtung (14) zur Aufnahme einer elektrochemisch zu bearbeitenden Komponente (100) für Batteriezellen, beschrieben, wobei die Vorrichtung (10, 20, 50) mindestens einen elektrischen Kontakt (16, 16a, 16b) umfasst, der reversibel mit der zu bearbeitenden Komponente (100) für Batteriezellen in physischen Kontakt bringbar ausgeführt ist und wobei weiterhin ein Mittel (18) zum Anlegen einer Spannung an den elektrischen Kontakt (16, 16a, 16b) vorgesehen ist, derart, dass die elektrochemische Bearbeitung der Komponente (100) für Batteriezellen aufgrund der an den elektrischen Kontakt (16, 16a, 16b) angelegten Spannung erfolgt.

## Beschreibung

Die vorliegende Erfindung bezieht sich auf eine Vorrichtung zur elektrochemischen Bearbeitung von Komponenten für Batteriezellen sowie auf ein Verfahren zum Betrieb derselben und deren Verwendung gemäß dem Oberbegriff der unabhängigen Patentansprüche.

### Stand der Technik

Zur Speicherung elektrischer Energie werden üblicherweise Batterien eingesetzt. Bei diesen unterscheidet man sogenannte Primärbatterien, die nur einmal geladen werden können und sogenannte Sekundärbatterien, die mehrfach aufladbar sind. Üblicherweise umfassen derartige Batterien eine Mehrzahl einzelner Batteriezellen. Im Bereich sekundärer Batteriezellen, auch Akkumulatoren genannt, finden insbesondere sogenannte Lithium-Ionen-Batteriezellen Verwendung. Diese zeichnen sich u. a. durch eine hohe Energiedichte, eine gute thermische Stabilität sowie eine äußerst geringe Selbstentladung aus. Akkumulatoren auf der Basis von Lithium-Ionen-Batteriezellen finden somit u. a. Anwendung in Kraftfahrzeugen wie insbesondere Elektrofahrzeugen (electric vehicles, EV), in Hybridfahrzeugen (hybrid electric vehicles, HEV) sowie in Plug-In-Hybridfahrzeugen (plug-in-hybrid-electric vehicles, PHEV).

Lithium-Ionen-Batteriezellen umfassen jeweils eine Kathode als positive Elektrode sowie eine Anode als negative Elektrode. Beide Elektroden umfassen jeweils einen metallischen elektrischen Kontakt, auf dem ein elektrochemisches Aktivmaterial aufgebracht ist, an dessen Oberfläche die der elektrischen Stromspeicherung zugrundeliegenden elektrochemischen Prozesse ablaufen. So werden für Kathoden üblicherweise als Aktivmaterial Metalloxide eingesetzt. Als Aktivmaterial für Anoden werden heute üblicherweise kohlenstoffhaltige Aktivmaterialien wie Graphit oder amorpher Kohlenstoff (hard carbon) eingesetzt oder auch Silizium oder Lithiumtitanate.

Neuere Entwicklungen zielen auf die Verwendung von Lithium-Metall als Aktivmaterial der Anode. Als Separator derartiger lithiummetallhaltiger Batteriezellen werden insbesondere feste Elektrolytmaterialien eingesetzt. Diese unterstützen beispielsweise beim Laden der Batteriezelle eine flächig ebene Abscheidung metallischen Lithiums im Bereich der Anode und verhindern, dass Lithium in Form von Dendriten aufwächst. Dafür werden überwiegend steife, insbesondere polymere Festelektrolyte mit einer Submikro- oder Nanostruktur eingesetzt. Diese sind auch bei Betriebstemperaturen einer derartigen Batteriezelle im Bereich von ca. 80°C in der Lage, eine entsprechende mechanische Stabilisierung der aus Lithiummetall gebildeten Anode zu leisten.

Typische verwendete Polymerelektrolyte, beispielsweise auf Polyethylenoxid-Basis (PEO) sind bei Temperaturen oberhalb dieser typischen Betriebstemperaturen flüssig. Ab 180°C ist Lithium in metallischer Form jedoch selbst flüssig und ein in diesem Bereich ebenfalls flüssiger Separator kann dann den Kontakt zwischen dem verwendeten Lithium und einer Kathode der Batteriezelle nicht verhindern. Dies würde zu sicherheitskritischen Zuständen in der Batteriezelle führen.

Derartige Festelektrolytzellen haben weiterhin den Vorteil, dass auf die Verwendung organischer Lösungsmittel verzichtet werden kann. Anteile derartiger Lösungsmittel können ansonsten zu unerwünschten Nebenreaktionen vor allem an lithiumhaltigen Anoden führen. Dabei können sich bspw. resistive Schichten oder Gase bilden, die den Schichtverbund der Festelektrolytzelle beeinträchtigen können. Voraussetzung ist allerdings, dass derartige Lösungsmittel nach dem Herstellen der entsprechenden Komponenten für Batteriezellen ausreichend sorgfältig entfernt werden. Üblicherweise werden für derartige Trocknungsprozesse erhöhte Temperaturen bzw. ein Unterdruck eingesetzt. Weiterhin können derartige Komponenten für Batteriezellen mit einem entsprechenden Gasstrom eines lösungsmittelfreien Gases beaufschlagt werden, um den Stoffübergangskoeffizient zwischen zu trocknender Batteriezellkomponente und Umgebung zu erhöhen. Bei Anwendung dieser Methodik steigt allerdings der Aufwand um geringe Restkonzentration an Lösungsmittel aus den gefertigten Batteriezellkomponenten zu entfernen überproportional an je geringer die Beladung der herzustellenden Batteriezellkomponenten mit Restlösungsmittel ist.

Diesbezüglich ist aus der US 2016/344080 eine Metall-Luft-Batterie bekannt, bei der die der Batterie zugeführte Luft vor dem Eintritt über eine Reinigungseinheit gereinigt wird. Die Reinigung erfolgt durch die Absorption von Verunreinigungen. Auf diese Weise kann beispielsweise Wasser aus der zugeführten Luft entfernt werden.

Weiterhin ist aus der US 2012/106017 eine Überwachungsvorrichtung in einer Kraftfahrzeugbatterie bekannt, die beispielsweise den Wassergehalt innerhalb der Batterie bestimmt. Auf diese Weise können sicherheitskritische Zustände vermieden werden.

### Offenbarung der Erfindung

Erfindungsgemäß wird eine Vorrichtung zur elektrochemischen Bearbeitung von Komponenten für Batteriezellen sowie ein Verfahren zum Betrieb derselben und deren Verwendung mit den kennzeichnenden Merkmalen der unabhängigen Patentansprüche zur Verfügung gestellt.

Die erfindungsgemäße Vorrichtung zur elektrochemischen Bearbeitung von Komponenten für Batteriezellen dient beispielsweise der Trocknung von Komponenten für Batteriezellen. Bei den Komponenten für Batteriezellen handelt es sich beispielsweise um eine Anode oder eine Kathode der Batteriezelle oder um einen Separator der Batteriezelle. Weiterhin kann es sich bei der elektrochemisch zu behandelnden Komponente für Batteriezellen um eine Kombination einer der Elektroden mit einem Separator handeln.

Die erfindungsgemäße Vorrichtung zur elektrochemischen Bearbeitung von Komponenten für Batteriezellen umfasst beispielsweise eine Aufnahme für eine zu behandelnde Komponente für Batteriezellen. Darin wird die elektrochemisch zu bearbeitende Komponente für Batteriezellen reversibel aufgenommen. Erfindungsgemäß ist nun vorgesehen, dass die Vorrichtung zur elektrochemischen Bearbeitung von Komponenten für Batteriezellen weiterhin einen elektrischen Kontakt umfasst, der reversibel mit der elektrochemisch zu bearbeitenden Komponente für Batteriezellen in physischen Kontakt bringbar angeordnet ist. Weiterhin ist vorgesehen, dass die Vorrichtung zur elektrochemischen Bearbeitung von Komponenten für Batteriezellen ein Mittel zum Anlegen einer elektrischen Spannung an den elektrischen Kontakt umfasst, derart, dass die an den elektrischen Kontakt angelegte elektrische Spannung zu einer elektrochemischen Bearbeitung der zu bearbeitenden Komponente für Batteriezellen führt.

Diese Vorgehensweise hat den Vorteil, dass Komponenten für Batteriezellen bereits im nicht verbauten Zustand elektrochemisch bearbeitet werden können, insbesondere getrocknet werden können. Da eine weitgehende Entfernung beispielsweise von Resten an Lösungsmitteln - organische Lösungsmittel wie auch Wasser - aus Komponenten für Batteriezellen wie den Elektroden und dem Separator eine hohe Relevanz aufweist, gleichzeitig aber die Entfernung derartiger Lösungsmittelreste mit üblichen Methoden nur unter einem hohen Aufwand zu realisieren ist, erlaubt die erfindungsgemäße Vorrichtung zur elektrochemischen Bearbeitung von Komponenten für Batteriezellen auf einfachem elektrochemischem Wege eine Bearbeitung dieser Komponenten unter Entfernung beispielsweise von Lösungsmittelresten.

Weitere vorteilhafte Ausführungsformen der vorliegenden Erfindung sind Gegenstand der Unteransprüche.

So ist es von Vorteil, wenn die Vorrichtung zur elektrochemischen Bearbeitung von Komponenten für Batteriezellen für den Fall, dass es sich bei der zu bearbeitenden Komponente um einen Schichtverbund einer Elektrode der Batteriezelle mit einem Separator der Batteriezelle handelt, also um einen Verbund aus einer Anode der Batteriezelle mit einem Separator oder um einen Verbund einer Kathode der Batteriezelle mit einem Separator, so ausgestaltet ist, dass weiterhin ein Kontaktierungsmittel vorgesehen ist, das es erlaubt, die in der Komponente für Batteriezellen enthaltene Elektrode in Form einer Anode oder einer Kathode elektrisch reversibel zu kontaktieren. Auf diese Weise kann eine Spannung zur elektrochemischen Bearbeitung der Komponente zwischen der in der Komponente enthaltenen Elektrode und dem elektrischen Kontakt der Vorrichtung auf einfache Weise angelegt werden und der Verbund aus Separator und Elektrode der Batteriezelle von Lösungsmittelresten wirksam befreit werden.

Gemäß einer weiteren vorteilhaften Ausführungsform der vorliegenden Erfindung ist die Vorrichtung zur elektrochemischen Bearbeitung von Komponenten für Batteriezellen für den Fall, dass es sich bei der Komponente für Batteriezellen um einen beispielsweise schichtförmigen Separator handelt, mit zwei elektrischen Kontakten ausgestattet, die jeweils in der Lage sind, reversibel mit der zu bearbeitenden Komponente in physischen Kontakt zu treten, derart, dass die elektrischen Kontakte zur elektrochemischen Bearbeitung jeweils in physischen Kontakt mit zwei sich gegenüberliegenden Großflächen der Komponente bspw. in Form eines schichtförmigen Separators treten. Bei Anlegen einer entsprechenden Spannung zwischen den beiden elektrischen Kontakten der Vorrichtung erfolgt eine elektrochemische Bearbeitung der zwischen den beiden elektrischen Kontakten positionierten Komponente für Batteriezellen, beispielsweise in Form einer Entfernung von Lösungsmittelresten aus einem in diesem Fall die Komponente bildenden schichtförmigen Separator.

Gemäß einer besonders vorteilhaften Ausführungsform der vorliegenden Erfindung umfasst die Vorrichtung zur elektrochemischen Bearbeitung von Komponenten für Batteriezellen ein Steuerungsmittel zum Anlegen einer Spannung oder eines Spannungsverlaufs an die Komponente für Batteriezellen zur elektrochemischen Bearbeitung derselben. Dabei umfasst das Steuerungsmittel einen Speicher und/oder ein gespeichertes Kennfeld, in dem eine entsprechende Spannung oder ein entsprechender Spannungsverlauf hinterlegt ist, bei dessen Anwendung es zu der elektrochemischen Bearbeitung der Komponente für Batteriezellen kommt. Insbesondere ist ein gespeichertes Kennfeld vorgesehen, das eine elektrische Spannung oder einen Spannungsverlauf in Abhängigkeit eines aus der Komponente für Batteriezellen elektrochemisch zu entfernenden Lösungsmittel zeigt.

Gemäß einer weiteren vorteilhaften Ausführungsform der Erfindung ist der mindestens eine elektrische Kontakt der Vorrichtung zur elektrochemischen Bearbeitung einer Komponente für Batteriezellen aus Kupfer oder Nickel, bspw. aber auch aus Eisenwerkstoffen, Stählen, Edelstählen, Titan, Gold, Aluminium, Silber, Platin oder Palladium ausgeführt. Auch geeignet sind elektrisch leitfähige, nicht metallische Folien bspw. aus kohlenstoffhaltigen Materialien wie Graphit. Auf diese Weise ist der mindestens eine elektrische Kontakt resistent gegenüber korrosiven Einflüssen, die im Zusammenhang mit einer elektrochemischen Bearbeitung von Komponenten für Batteriezellen auftreten können.

Darüber hinaus ist es von Vorteil, wenn der mindestens eine elektrische Kontakt in Form einer elektrisch leitfähigen Folie ausgeführt ist. Dies bietet die Möglichkeit, den elektrischen Kontakt reversibel auf einer Großfläche einer elektrochemisch zu bearbeitenden Komponente für Batteriezellen auszurollen. Der entstehende Verbund aus dem folienförmigen elektrischen Kontakt und einer beispielsweise schichtförmig ausgeführten Komponente für Batteriezellen kann dann beispielsweise über eine geeignete Aufwickelvorrichtung zur elektrochemischen Bearbeitung der Komponente für Batteriezellen aufgewickelt werden.

Als elektrisch leitfähige Folie eignen sich metallische Folien insbesondere aus Kupfer oder Nickel, bspw. aber auch aus Eisenwerkstoffen, Stählen, Edelstählen, Titan, Gold, Aluminium, Silber, Platin oder Palladium. Auch geeignet sind elektrisch leitfähige, nicht metallische Folien bspw. aus kohlenstoffhaltigen Materialien wie Graphit.

Auf diese Weise können beispielsweise auch Komponenten für Batteriezellen in Form von beidseitig mit Aktivmaterial beschichteten Kathoden, die ihrerseits beidseitig mit einer entsprechenden Separatorschicht versehen sind, aufgrund des Wickelvorgangs auf jeder ihrer Großflächen in physischen Kontakt mit dem mindestens einen, folienförmig ausgeführten elektrischen Kontakt treten. Bei einer nachfolgenden elektrochemischen Bearbeitung dieser beidseitig mit einer Separatorschicht versehenen Kathode erfolgt eine simultane beidseitige elektrochemische Bearbeitung dieser Elektrode, bedingt dadurch, dass aufgrund des Aufwickelns des Verbundes aus elektrischem Kontakt und elektrochemisch zu bearbeitender Komponente der elektrische Kontakt mit beiden Großflächen der zu bearbeitenden Komponente in physischen Kontakt kommt. Dies ermöglicht zum einen die elektrochemische Bearbeitung auch großflächiger Komponenten für Batteriezellen und zum anderen erübrigt sich die Bereitstellung eines zweiten elektrischen Kontakts zur elektrochemischen Bearbeitung einer zweiten Großfläche der elektrochemisch zu bearbeitenden Komponente für Batteriezellen.

Weiterhin ist es von Vorteil, wenn der mindestens eine elektrische Kontakt mit einer offenporigen Struktur versehen ist oder eine Oberflächenstrukturierung aufweist, die derart ausgeführt ist, dass bei einer elektrochemischen Bearbeitung von Komponenten für Batteriezellen entstehende Gase entweichen können. Dem liegt die Erkenntnis zu Grunde, dass die elektrochemische Zersetzung beispielsweise von Lösungsmittelrückständen in Elektroden oder Separatorschichten zur Bildung von Gasen führt, deren Entweichen gewährleistet werden sollte, um Beschädigungen der Komponente für Batteriezellen durch lokal entstehende Gasblasen und eine damit ggf. verbundenen Kontaktverlust der einzelnen Schichten der Komponente untereinander zu vermeiden.

Gemäß einer weiteren besonders vorteilhaften Ausführungsform ist der mindestens eine elektrische Kontakt in Form einer elektrisch leitfähigen, bspw. metallischen oder oberflächlich metallisierten Walze bzw. Rolle ausgeführt. Dies bietet den Vorteil, dass während einer elektrochemischen Bearbeitung der Komponente für Batteriezellen der walzenförmige elektrische Kontakt in oberflächlichen Kontakt mit einer Großfläche der elektrochemisch zu bearbeitenden Komponente für Batteriezellen gebracht werden kann und beispielsweise während der elektrochemischen Bearbeitung einer abrollenden Bewegung über die Großfläche der Komponente für Batteriezellen unterworfen werden kann.

Weiterhin bietet dies die Möglichkeit, die elektrochemisch zu bearbeitende Komponente für Batteriezellen um den als metallische oder oberflächlich metallisierte Walze ausgeführten elektrischen Kontakt herumzuführen und somit die elektrochemisch zu bearbeitende Komponente für Batteriezellen abschnittsweise nacheinander einer elektrochemischen Bearbeitung zu unterziehen.

Dies ermöglicht in besonders vorteilhafter Form einerseits die Verarbeitung von Komponenten für Batteriezellen, die in einem Endlosformat vorliegen, als auch eine bereichsweise gezielte elektrochemische Bearbeitung von Oberflächenabschnitten einer Komponente für Batteriezellen, die beispielsweise einer unterschiedlichen oder unterschiedlich intensiven elektrochemischen Bearbeitung beispielsweise unter Anwendung unterschiedlicher Bearbeitungsspannungen bedürfen.

Hierbei ist es besonders vorteilhaft, wenn beispielsweise die elektrochemisch zu bearbeitende Komponente für Batteriezellen um den als metallische oder oberflächlich metallisierte Walze ausgeführten elektrischen Kontakt herumgewickelt wird, derart, dass sich eine Mehrzahl von Wicklungen auf der Oberfläche des als metallische oder oberflächlich metallisierte Walze ausgeführten elektrischen Kontakts ergeben, wobei die Wicklungen in Längsrichtung der Walze nebeneinander positioniert sind. Ist der elektrische Kontakt in Form einer metallischen oder oberflächlich metallisierten Walze drehbar gelagert, so kann auch in diesem Fall eine Komponente für Batteriezellen, die in einem Endlosband vorliegt, in einem fortlaufenden Prozess nacheinander abschnittsweise einer elektrochemischen Bearbeitung unterzogen werden.

Die erfindungsgemäße Vorrichtung ermöglicht vorteilhafterweise ein Verfahren zur elektrochemischen Bearbeitung von Komponenten für Batteriezellen, bei dem in einem ersten Schritt eine entsprechende Komponente für Batteriezellen von einer Aufnahmevorrichtung der Vorrichtung aufgenommen wird, in einem zweiten Schritt mindestens ein elektrischer Kontakt in physischem Kontakt mit der elektrochemisch zu bearbeitenden Komponente für Batteriezellen gebracht wird, in einem dritten Schritt eine entsprechende elektrische Spannung zur elektrochemischen Bearbeitung der Komponente für Batteriezellen an die Komponente für Batteriezellen angelegt wird, und in einem vierten Schritt die elektrochemisch bearbeitete Komponente für Batteriezellen aus der Aufnahmevorrichtung wieder entnommen wird.

Die erfindungsgemäße Vorrichtung bzw. das Verfahren zu dessen Betrieb lässt sich vorteilhaft verwenden bei der Herstellung von Batteriezellen, insbesondere lithiumhaltigen, wiederaufladbaren Batteriezellen für Batterien, die Anwendung finden in mobilen Anwendungen wie Elektrofahrzeugen, Hybridfahrzeugen oder Plug-In-Hybridfahrzeugen sowie in portablen Anwendungen wie beispielsweise Heimwerkergeräten oder in Einrichtungen zur mobilen Telekommunikation, aber auch Anwendung finden in stationären Energiespeichern beispielsweise zur Speicherung regenerativ gewonnener elektrischer Energie oder in Brennstoffzellen.

### Kurze Beschreibung der Zeichnungen

Ausführungsformen der vorliegenden Erfindung sind in der Zeichnung dargestellt und in der nachfolgenden Figurenbeschreibung näher erläutert. Es zeigt
- Figur 1a bis 1d:: einen schematischen Ausschnitt einer Vorrichtung zur elektrochemischen Bearbeitung von Komponenten für Batteriezellen gemäß einer ersten Ausführungsform der vorliegenden Erfindung für jeweils unterschiedliche Komponenten für Batteriezellen,
- Figur 2:: einen schematischen Ausschnitt einer Vorrichtung zur elektrochemischen Bearbeitung von Komponenten für Batteriezellen gemäß einer zweiten Ausführungsform der vorliegenden Erfindung,
- Figur 3:: einen schematischen Ausschnitt einer Vorrichtung zur elektrochemischen Bearbeitung von Komponenten für Batteriezellen gemäß einer dritten Ausführungsform der vorliegenden Erfindung,
- Figur 4:: einen schematischen Ausschnitt einer Vorrichtung zur elektrochemischen Bearbeitung von Komponenten für Batteriezellen gemäß einer vierten Ausführungsform,
- Figur 5:: einen schematischen Ausschnitt einer Vorrichtung zur elektrochemischen Bearbeitung von Komponenten für Batteriezellen gemäß einer fünften Ausführungsform der vorliegenden Erfindung,
- Figur 6: die in Figur 5 dargestellte Vorrichtung in einem späteren Verfahrensstadium,
- Figur 7:: die in den Figuren 5 und 6 dargestellte Vorrichtung in einer alternativen Ausführungsform und
- Figur 8:: ein schematisches Fließschaubild eines Verfahrens zum Betrieb der in den Figuren 1 bis 7 gezeigten Ausführungsformen der erfindungsgemäßen Vorrichtung.

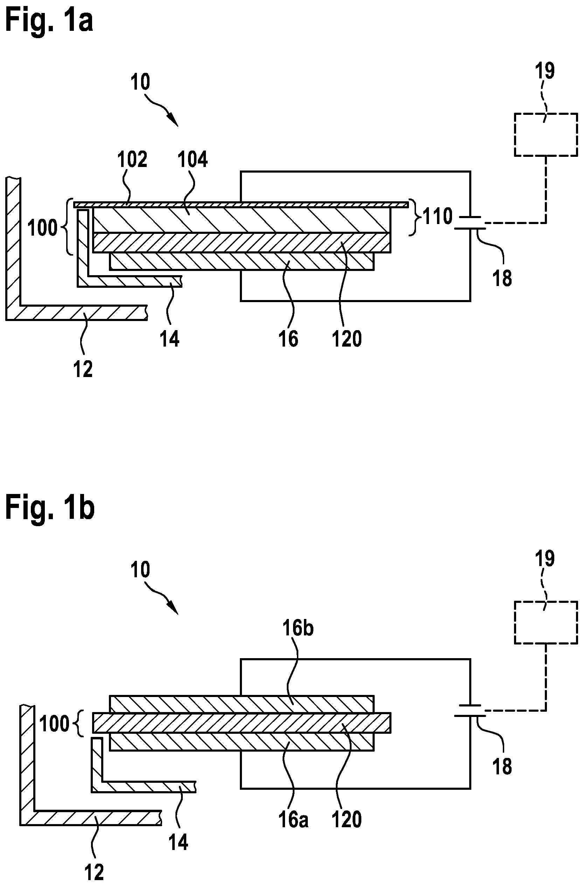

In Figur 1a ist eine Vorrichtung 10 zur elektrochemischen Bearbeitung von Komponenten für Batteriezellen gemäß einer ersten Ausführungsform der vorliegenden Erfindung dargestellt. Die Vorrichtung 10 umfasst ein in Figur 1a schematisch dargestelltes Gehäuse 12, in dem eine Aufnahmevorrichtung 14 positioniert ist, die der Aufnahme einer elektrochemisch zu bearbeitenden Komponente für Batteriezellen dient. Die Komponente 100 für Batteriezellen umfasst in Figur 1a beispielsweise eine Anode 110 und einen auf der Anode 110 flächig aufgebrachten Separator 120, der mit einem Elektrolyten getränkt ist oder als Elektrolyt wirkt. Die Anode 110 umfasst beispielsweise einen Stromableiter 102 sowie ein auf diesen aufgebrachtes Elektrodenaktivmaterial 104. Die Vorrichtung 10 umfasst weiterhin einen metallischen Kontakt 16, der vorzugsweise reversibel in flächigen Kontakt mit der Komponente 100, insbesondere mit dem Separator 120 gebracht wird.

Zur elektrochemischen Bearbeitung der Komponente 100 werden der Stromableiter 102 der Komponente 100 sowie der metallische Kontakt 16 mit einer Spannungsquelle 18 elektrisch leitend verbunden. Durch Anlegen einer geeigneten Spannung durch die Spannungsquelle 18 an den elektrischen Stromableiter 102 und den metallischen Kontakt 16 kommt es zu elektrochemischen Vorgängen innerhalb der Komponente 100. So kann die elektrochemische Bearbeitung der Komponente 100 beispielsweise der Trocknung bzw. der Entfernung von Lösemittelrückständen aus der Komponente 100 dienen. Dazu wird die an der Spannungsquelle 18 anliegende Spannung so eingestellt, dass es einerseits nicht zu einer elektrochemischen Veränderung des Materials des Separators 120 oder des Elektrodenaktivmaterials 104 der Anode 110 kommt, andererseits die angelegte Spannung jedoch ausreichend hoch ist, um beispielsweise Lösungsmittelrückstände in dem Separator 120 oder der Anode 110 weitgehend elektrochemisch zu zersetzen, indem diese Lösungsmittelrückstände elektrochemisch reduziert bzw. oxidiert werden.

Auf diese Weise wird eine elektrochemische Trocknung der Komponente 100 realisiert. Weiterhin wird die durch die Spannungsquelle 18 bereitgestellte Spannung so gewählt, dass es nicht zu einer Reduktion bzw. Oxidation des beispielsweise in der Anode 110 enthaltenen Lithiums kommt. Zur Steuerung der von der Spannungsquelle 18 bereitgestellten Spannung ist beispielsweise ein Steuerungsmittel 19 vorgesehen, in dem beispielsweise geeignete Spannungswerte beispielsweise in einem Speicher oder einem Kennfeld hinterlegt sind. Die geeigneten Spannungswerte können beispielsweise in Form eines Kennfeldes hinterlegt sein, bei dem eine an der Spannungsquelle 18 anliegende Spannung mit einem geeigneten Potentialverlauf zeitlicher Art korreliert ist oder mit der Art eines zu zersetzenden Lösungsmittels. Auf diese Weise kann zum einen je nach Wahl der an der Spannungsquelle 18 anliegenden Spannung eine zeitliche Änderung derselben beispielsweise in Form eines linearen Anstiegs der an der Spannungsquelle 18 anliegenden Spannung realisiert werden oder die an der Spannungsquelle 18 anliegende Spannung kann spezifisch für ein bestimmtes zu zersetzendes Lösungsmittel eingestellt werden. Die Art des zu zersetzenden Lösungsmittels kann beispielsweise über eine nicht dargestellte Bedieneinheit der Vorrichtung 10 dem Steuerungsmittel 19 mitgeteilt werden.

In Figur 1b ist die Vorrichtung 10 zur elektrochemischen Bearbeitung von Komponenten für Batteriezellen in einer alternativen Ausführungsform dargestellt. Es bezeichnen gleiche Bezugszeichen gleiche Bauteilkomponenten wie in Figur 1a.

Die Vorrichtung 10 ist so ausgeführt, dass als Komponente 100 für Batteriezellen beispielsweise ein Separator 120 oder ein als Elektrolyt fungierender oder mit diesem benetzter Separator 120 einer elektrochemischen Bearbeitung unterzogen werden kann. Dazu umfasst die Vorrichtung 10 einen ersten metallischen Kontakt 16a und einen zweiten metallischen Kontakt 16b. Die metallischen Kontakte 16a, 16b sind vorzugsweise variabel auf zwei einander gegenüberliegenden Großflächen des Separators 120 in physischem Kontakt mit demselben positioniert. Durch Anlegen einer entsprechenden Spannung an der Spannungsquelle 18 kommt es zu einer elektrochemischen Bearbeitung der Komponente 100 in Form des Separators 120. Auf diese Weise kann beispielsweise der Separator 120 einer gezielten Entfernung von Lösungsmittelrückständen durch elektrochemische Trocknung unterzogen werden.

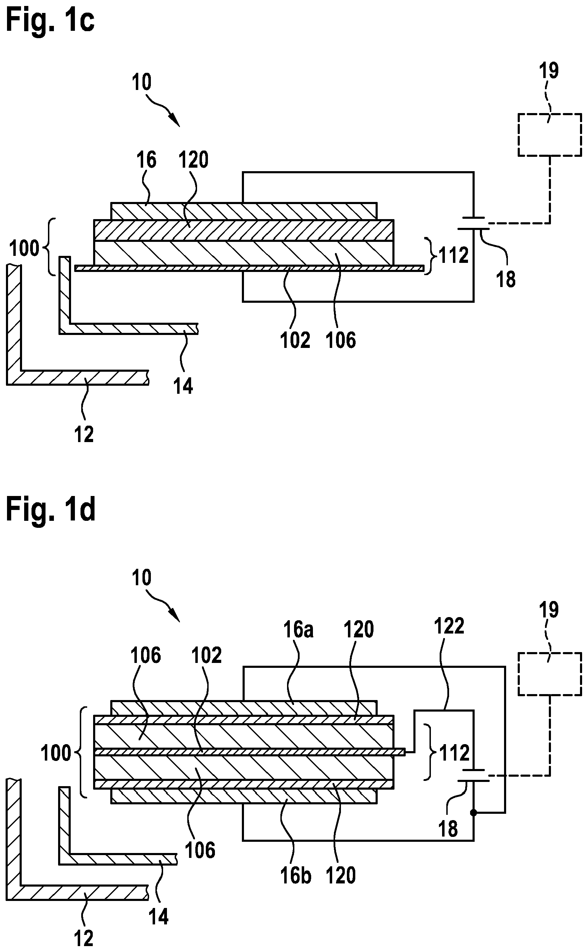

In Figur 1c ist eine Vorrichtung 10 zur elektrochemischen Bearbeitung von Komponenten 100 für Batteriezellen gemäß einer zweiten alternativen Ausführungsform dargestellt. Als Komponente 100 wird in dieser Ausführungsform eine Kathode 112, welche auf einer Großfläche mit einem Separator 120 bzw. einem Elektrolyten oder einer elektrolythaltigen Schicht versehen ist, einer elektrochemischen Bearbeitung, insbesondere Trocknung unterzogen. Die Kathode 112 umfasst dabei bspw. ein zweites Elektrodenaktivmaterial 106 sowie ebenfalls einen Stromableiter 102. Auch in dieser Ausführungsform ist analog zu der in Figur 1a dargestellten Ausführungsform ein metallischer Kontakt 16 reversibel in physischem Kontakt mit dem Separator 120 positioniert. Bei Anliegen einer Spannung an die Spannungsquelle 18 kommt es zu einer elektrochemischen Bearbeitung der Komponente 100, insbesondere zu einer elektrochemischen Trocknung bzw. Entfernung von Lösungsmittelrückständen aus dem Material derselben.

In Figur 1d ist eine Vorrichtung zur elektrochemischen Bearbeitung von Komponenten für Batteriezellen gemäß einer dritten alternativen Ausführungsform dargestellt. Es bezeichnen weiterhin gleiche Bezugszeichen gleiche Bauteilkomponenten wie in den Figuren 1a bis 1c.

Die Vorrichtung 10 gemäß der dritten alternativen Ausführungsform dient der elektrochemischen Bearbeitung einer Komponente 100 für Batteriezellen, die eine beidseitig mit Aktivmaterial beschichtete Elektrode, hier Kathode 112, umfasst. So ist die Kathode 112 ihrerseits auf Basis eines Stromableiters 102 gebildet, der beidseitig mit zweitem Elektrodenaktivmaterial 106 beschichtet ist. Der Stromableiter 102 bildet zusammen mit den Schichten des zweiten Elektrodenaktivmaterials 106 die Kathode 112. Die Kathode 112 ihrerseits ist vorzugsweise beidseitig jeweils auf ihrer Großfläche mit einem Separator 120 und/oder einem Elektrolyten und/oder einem mit einem Elektrolyten versehenen Material beschichtet.

Die schichtförmigen Separatoren 120 sind vorzugsweise jeweils auf ihrer Großfläche ihrerseits in elektrisch leitendem physischem Kontakt mit jeweils einem dort reversibel platzierten metallischen Kontakt 16a, 16b ausgeführt. Weiterhin ist der Stromableiter 120 über eine Kontaktierungsmittel 122 ebenfalls in elektrisch leitendem Kontakt mit der Spannungsquelle 18 ausgeführt. Bei Anlegen einer geeigneten Spannung an die Spannungsquelle 18 erfolgt eine elektrochemische Bearbeitung der Komponente 100, vorzugsweise eine Trocknung bzw. eine Entfernung von Lösungsmittelrückständen aus dem Material derselben.

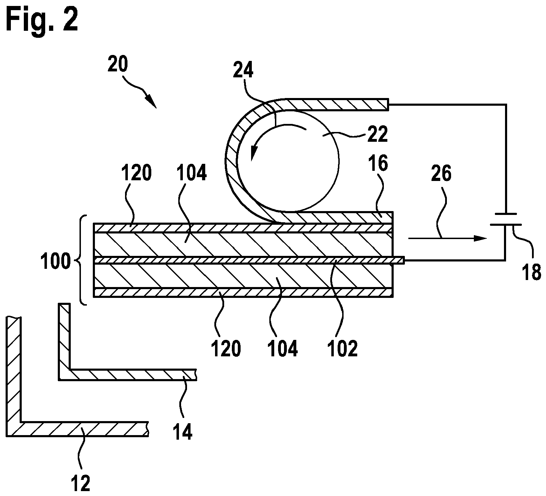

In Figur 2 ist eine Vorrichtung 20 zur elektrochemischen Bearbeitung von Komponenten für Batteriezellen in einer zweiten Ausführungsform dargestellt. Weiterhin bezeichnen gleiche Bezugszeichen gleiche Bauteilkomponenten wie in den vorhergehenden Figuren.

Die Vorrichtung 20 gemäß der zweiten Ausführungsform umfasst einen metallischen Kontakt 16 in Form einer flexiblen metallischen Folie. Diese wird in flächigen Kontakt mit der Komponente 100 gebracht, indem diese beispielsweise mittels einer Rollvorrichtung 22 auf eine Oberfläche der Komponente 100 aufgerollt wird. Dazu wird die Rollvorrichtung 22 beispielsweise mit einer durch den Pfeil 24 verdeutlichten Rollrichtung gedreht und alternativ bzw. zusätzlich die Komponente 100 einer translatorischen Bewegung in einer durch den Pfeil 26 verdeutlichten Richtung unterworfen.

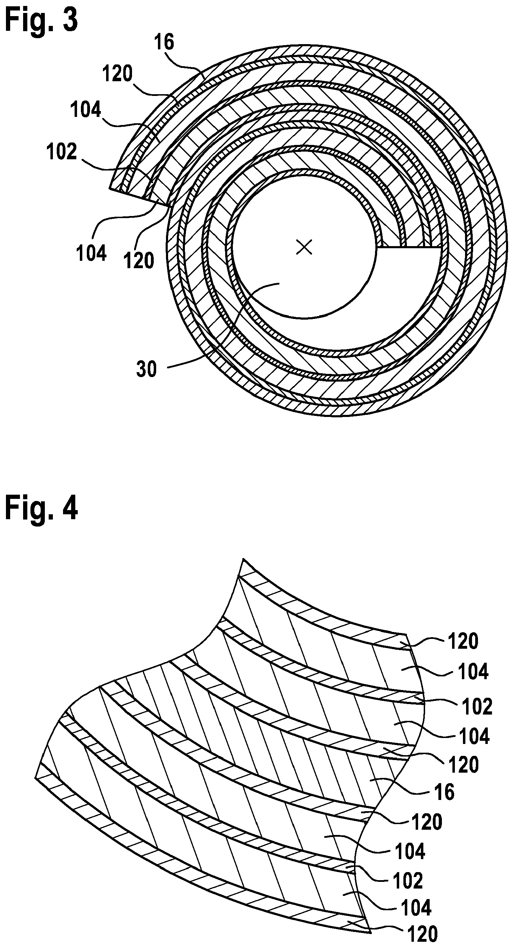

Auf diese Weise können auch Komponenten 100 mit sehr großer Längserstreckung oder als Endlosband ausgeführte Komponenten 100 einer elektrochemischen Bearbeitung auf einfache Weise unterworfen werden. Weiterhin kann vorgesehen sein, dass die Vorrichtung 20 zusätzlich eine Aufwickelvorrichtung umfasst. Ein derartiger Aufbau der Vorrichtung 20 ist beispielsweise in Figur 3 verdeutlicht.

Dabei wird der in Figur 2 dargestellte Verbund aus Komponente 100 und metallischem Kontakt 16 in Form einer flexiblen metallischen Folie mittels einer Aufwickelvorrichtung 30 derart aufgewickelt, dass der metallische Kontakt 16 in Form einer metallischen Folie beidseitig in physischem elektrisch leitendem Kontakt mit der Komponente 100 positioniert ist. Auf diese Weise kann alleine mittels eines elektrischen Kontaktes 16 auch eine Komponente 100 einer elektrochemischen Behandlung bzw. Trocknung unterzogen werden, die eine beidseitig beschichtete Elektrode - Anode 110 oder Kathode 112 - umfasst. Die Verwendung eines zweiten metallischen Kontakts wie beispielsweise in Figur 1d vorgesehen, entfällt.

Ein Ausschnitt eines mittels der Aufwickelvorrichtung 30 erzeugten Wickels aus metallischem Kontakt 16 und Komponente 100 ist auch in Figur 4 dargestellt. Der dort gezeigte Wickel weist die Besonderheit auf, dass der metallische Kontakt 16 in Form einer oberflächenstrukturierten Folie ausgeführt ist. Alternativ ist es auch möglich, den metallischen Kontakt 16 aus einem offenporigen Material vorzusehen. Grundsätzlich ist es möglich, bei allen in den Figuren gezeigten Ausführungsformen den metallischen Kontakt 16 in Form einer Folie mit einer Oberflächenstrukturierung oder aus einem Material offenporiger Natur vorzusehen. Auf diese Weise können bei der elektrochemischen Behandlung der Komponente 100 bzw. bei der Entfernung beispielsweise von Lösungsmittelresten aus dem Material derselben dabei entstehende Gase auf einfache Weise abgeleitet werden und es werden negative Effekte durch einen entstehenden Gasüberdruck lokaler Art vermieden.

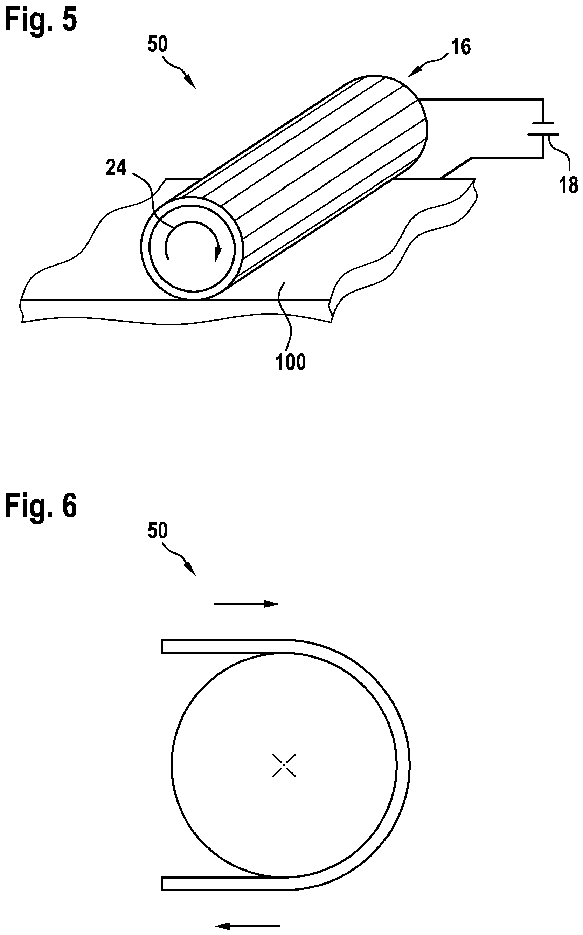

In Figur 5 ist schematisch ein Ausschnitt aus einer Vorrichtung 50 gemäß einer dritten Ausführungsform der vorliegenden Erfindung dargestellt. Es bezeichnen gleiche Bezugszeichen gleiche Bauteilkomponenten wie in den vorhergehenden Figuren.

Bei dieser Ausführungsform ist der metallische Kontakt 16 beispielsweise in Form einer drehbar gelagerten Walze ausgeführt. Dies ermöglicht eine reversible elektrische Kontaktierung der Komponente 100 beispielsweise wenn diese in Form eines Endlosbandes ausgeführt ist. Mittels dieser Ausführungsform lassen sich Oberflächenbereiche der Komponente 100 nacheinander beispielsweise unter Anwendung unterschiedlicher Reaktionsbedingungen wie Temperatur, Anpressdruck und/oder anliegender Spannung elektrochemisch bearbeiten. So können beispielsweise für vorbestimmte Oberflächenbereiche der Komponente 100 abweichende Spannungswerte mittels der Spannungsquelle 18 zur elektrochemischen Bearbeitung des jeweiligen Oberflächenbereichs der Komponente 100 vorgesehen werden.

Um eine Kontaktoberfläche zwischen einem metallischen Kontakt 16 in Form der in Figur 5 dargestellten Form einer Rolle und der Oberfläche der Komponente 100 zu vergrößern, kann die Komponente 100 beispielsweise partiell um den als Rolle ausgeführten metallischen Kontakt 16 geführt werden. Eine derartige Ausführungsform ist beispielsweise in Figur 6 dargestellt.

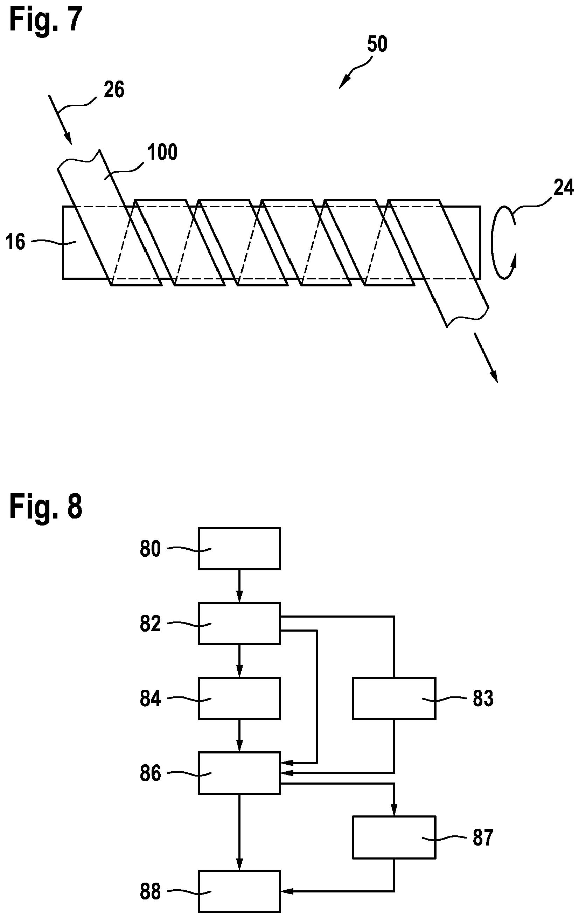

Weiterhin ist es möglich, die Komponente 100, die beispielsweise bandförmig ausgeführt ist, mehrfach um den metallischen Kontakt 16, der gemäß Figur 5 in Rollenform ausgeführt ist, zu wickeln. Eine derartige Ausführungsform ist in Figur 7 verdeutlicht. Auf diese Weise wird die Kontaktoberfläche zwischen metallischem Kontakt 16 und der Oberfläche der Komponente 100 weiter vergrößert.

In Figur 8 ist schematisch ein Verfahren zum Betrieb einer Vorrichtung gemäß den in den Figuren 1 bis 7 ausgeführten Ausführungsformen graphisch verdeutlicht.

In einem ersten Schritt 80 wird beispielsweise eine elektrochemisch zu bearbeitende Komponente 100 für Batteriezellen in der Aufnahmevorrichtung 14 der Vorrichtung 10, 50 vorgelegt. In einem zweiten Schritt 82 wird ein metallischer Kontakt 16, 16a, 16b in physischem, elektrisch leitendem Kontakt mit einer Oberfläche der Komponente 100 gebracht. Gleichzeitig oder in einem nachfolgenden Schritt 84 wird beispielsweise ein Stromableiter 102 der Komponente 100 elektrisch kontaktiert, sofern die Komponente 100 einen Stromableiter 102 einer darin enthaltenen Elektrode 110, 112 aufweist. Ist dies nicht der Fall, so werden im zweiten Schritt 82 beispielsweise zwei metallische Kontakte 16a, 16b in elektrisch leitenden Kontakt mit der Komponente 100 gebracht.

In einem dritten Schritt 86 wird mittels der Spannungsquelle 18 eine Spannung an die Komponente 100 zur elektrochemischen Bearbeitung derselben angelegt. Dabei werden beispielsweise Lösungsmittelreste, die während einer Herstellung der Komponente 100 im Material derselben verblieben sind, zumindest weitgehend erfolgreich entfernt. Nach Fertigstellung der elektrochemischen Bearbeitung der Komponente 100 wird diese in einem abschließenden Schritt 88 aus der Aufnahmevorrichtung 14 entfernt. Erfolgt die elektrochemische Bearbeitung der Komponente 100 mittels einer Vorrichtung 30 gemäß dritter Ausführungsform, so wird nach dem zweiten Schritt 82 beispielsweise ein zusätzlicher Schritt 83 eingefügt, bei dem der entstehende Verbund aus metallischem Kontakt 16 und Komponente 100 mittels der Aufwickelvorrichtung 30 zu einem Wickel aufgewickelt wird.

Weiterhin wird in diesem Fall nach erfolgter elektrochemischer Bearbeitung gemäß drittem Schritt 86 ein weiterer zusätzlicher Schritt 87 eingefügt, bei dem der einer elektrochemischen Bearbeitung unterzogene Wickel mittels der Aufwickelvorrichtung zunächst wieder abgewickelt wird, bevor im finalen Schritt 88 die elektrochemisch bearbeitete Komponente 100 entnommen wird.

Die erfindungsgemäße Vorrichtung bzw. das erfindungsgemäße Verfahren zum Betrieb derselben lässt sich in vorteilhafter Weise einsetzen zur elektrochemischen Bearbeitung von Komponenten für Batteriezellen, insbesondere von lithiumhaltigen Batteriezellen für Akkumulatoren oder in Brennstoffzellen. Diese wiederum finden Verwendung beispielsweise in mobilen Anwendungen wie Elektrofahrzeugen, Hybridfahrzeugen oder Plug-In-Hybridfahrzeugen sowie in Heimwerkeranwendungen als auch in portablen Einrichtungen zur Telekommunikation. Weiterhin können derartige Batteriezellen in stationären Energiespeichern beispielsweise zur Speicherung regenerativ erzeugter elektrischer Energie verwendet werden.

## Patentansprüche

1. Vorrichtung zur elektrochemischen Bearbeitung, insbesondere Trocknung, von Komponenten für Batteriezellen in Form einer Elektrode, eines Separators oder einer Kombination derselben, umfassend eine Aufnahmevorrichtung (14) zur Aufnahme einer elektrochemisch zu bearbeitenden Komponente (100) für Batteriezellen, **dadurch gekennzeichnet, dass** die Vorrichtung (10, 20, 50) mindestens einen elektrischen Kontakt (16, 16a, 16b) umfasst, der reversibel mit der zu bearbeitenden Komponente (100) für Batteriezellen in physischen Kontakt bringbar ausgeführt ist und dass weiterhin ein Mittel (18) zum Anlegen einer Spannung an den elektrischen Kontakt (16, 16a, 16b) vorgesehen ist, derart, dass die elektrochemische Bearbeitung der Komponente (100) für Batteriezellen aufgrund der an den elektrischen Kontakt (16, 16a, 16b) angelegten Spannung erfolgt.

2. Vorrichtung nach Anspruch 1, **dadurch gekennzeichnet, dass** für die elektrochemische Bearbeitung eines Schichtverbundes einer Elektrode (110, 112) mit einem Separator (120) als zu bearbeitender Komponente (100) für Batteriezellen weiterhin ein Kontaktierungsmittel zur reversiblen elektrischen Kontaktierung der Elektrode (110, 112) enthalten ist, derart, dass die Spannung zur elektrochemischen Bearbeitung der Komponente (100) zwischen dem elektrischen Kontakt (16, 16a, 16b) der Vorrichtung (10, 20, 50) und der Elektrode (110, 112) erfolgt.

3. Vorrichtung nach Anspruch 1, **dadurch gekennzeichnet, dass** zur elektrochemischen Bearbeitung einer Komponente (100) für Batteriezellen in Form eines Separators (120) zwei elektrische Kontakte (16a, 16b) vorgesehen sind, die derart ausgeführt sind, dass diese zur elektrochemischen Bearbeitung der Komponente (100) reversibel in flächigen Kontakt mit gegenüberliegenden Großflächen des Separators (120) bringbar ausgestaltet sind.

4. Vorrichtung nach einem der vorhergehenden Ansprüche, **dadurch gekennzeichnet, dass** weiterhin ein Steuerungsmittel (19) zum Anlegen einer elektrischen Spannung an die elektrochemisch zu bearbeitende Komponente (100) für Batteriezellen vorgesehen ist, die einen Speicher oder ein gespeichertes Kennfeld zur Hinterlegung einer Spannung oder eines Spannungsverlaufs zur elektrochemischen Bearbeitung der Komponente (100) für Batteriezellen umfasst, insbesondere die ein Kennfeld einer Spannung oder eines Spannungsverlaufs in Abhängigkeit eines aus der Komponente (100) elektrochemisch zu entfernenden Lösungsmittels aufweist.

5. Vorrichtung nach einem der vorhergehenden Ansprüche, **dadurch gekennzeichnet, dass** der mindestens eine elektrische Kontakt (16, 16a, 16b) zumindest oberflächlich aus Kupfer, Nickel oder Graphit ausgeführt ist.

6. Vorrichtung nach einem der vorhergehenden Ansprüche, **dadurch gekennzeichnet, dass** der elektrische Kontakt (16, 16a, 16b) in Form einer metallischen Folie ausgeführt ist, die auf eine Großfläche einer in die Aufnahmevorrichtung (14) der Vorrichtung (10, 20, 50) zur elektrochemischen Bearbeitung einer Komponente (100) für Batteriezellen aufgenommene Komponente (100) für Batteriezellen reversibel aufbringbar ist.

7. Vorrichtung nach Anspruch 6, **dadurch gekennzeichnet, dass** weiterhin eine Wicklungsvorrichtung (30) vorgesehen ist zum Aufwickeln eines Verbundes aus der elektrochemisch zu bearbeitenden Komponente (100) für Batteriezellen und des auf deren Großfläche reversibel positionierten elektrischen Kontakts (16, 16a, 16b) in Form einer metallischen Folie.

8. Vorrichtung nach einem der vorhergehenden Ansprüche, **dadurch gekennzeichnet, dass** der mindestens eine elektrische Kontakt (16, 16a, 16b) offen porös oder mit einer Oberflächenstrukturierung versehen ausgeführt ist, derart, dass während einer elektrochemischen Bearbeitung einer Komponente (100) für Batteriezellen ein Entweichen von während der elektrochemischen Bearbeitung einer Komponente (100) für Batteriezellen entstehender Gase ermöglicht wird.

9. Vorrichtung nach einem der Ansprüche 1 bis 6, **dadurch gekennzeichnet, dass** der mindestens eine elektrische Kontakt (16, 16a, 16b) in Form einer metallischen Walze oder einer oberflächlich metallisierten Walze ausgeführt ist, wobei die Aufnahmevorrichtung (14) für eine elektrochemisch zu bearbeitende Komponente (100) für Batteriezellen oder die Halterung der metallischen oder oberflächlich metallisierten Walze derart ausgeführt ist, dass während der elektrochemischen Bearbeitung der Komponente (100) für Batteriezellen eine translatorische Bewegung der metallischen oder oberflächlich metallisierten Walze parallel zu einer Großfläche der Komponente (100) für Batteriezellen in Rollrichtung der Walze durchführbar ist.

10. Vorrichtung nach Anspruch 9, **dadurch gekennzeichnet, dass** die Aufnahmevorrichtung (14) für eine elektrochemisch zu bearbeitende Komponente (100) für Batteriezellen derart ausgeführt ist, dass die Komponente (100) für Batteriezellen während der elektrochemischen Bearbeitung um die metallische oder oberflächlich metallisierte Walze geführt oder gewickelt ist.

11. Vorrichtung nach Anspruch 10, **dadurch gekennzeichnet, dass** die Aufnahmevorrichtung für eine elektrochemisch zu bearbeitende Komponente (100) für Batteriezellen derart ausgeführt ist, dass die Komponente (100) während der elektrochemischen Bearbeitung in mehreren in Längsrichtung der metallischen oder oberflächlich metallisierten Walze nebeneinander angeordneten Wicklungen auf der Oberfläche der metallischen oder metallisierten Walze aufgebracht ist.

12. Verfahren zum Betrieb einer Vorrichtung gemäß einem der vorhergehenden Ansprüche, **dadurch gekennzeichnet, dass** eine Komponente (100) für Batteriezellen von einer Aufnahmevorrichtung (14) der Vorrichtung (10, 20, 50) zur elektrochemischen Bearbeitung von Komponenten (100) für Batteriezellen in einem ersten Schritt (80) aufgenommen wird, in einem zweiten Schritt (82) mindestens ein elektrische Kontakt (16, 16a, 16b) mit der elektrochemisch zu bearbeitenden Komponente (100) für Batteriezellen in physischen Kontakt gebracht wird, in einem dritten Schritt (84) an die elektrochemisch zu bearbeitende Komponente (100) für Batteriezellen eine elektrische Spannung mittels des mindestens einen elektrischen Kontakts (16, 16a, 16b) angelegt wird und abschließend die elektrochemisch bearbeitete Komponente (100) für Batteriezellen aus der Aufnahmevorrichtung (14) wieder entnommen wird.

13. Verwendung einer Vorrichtung nach einem der Ansprüche 1 bis 11 sowie eines Verfahrens nach Anspruch 12 zur Herstellung von Komponenten für Batteriezellen, insbesondere von wieder aufladbaren, lithiumhaltigen Batteriezellen für Batterien für mobile Anwendungen wie Elektrofahrzeuge, Hybridfahrzeuge oder Plug-In-Hybridfahrzeuge oder für portable Anwendungen wie Heimwerkergeräte oder Einrichtungen zur mobilen Telekommunikation sowie für Batterien in stationären Anwendungen, insbesondere zur Speicherung regenerativ erzeugter elektrischer Energie oder in Brennstoffzellen.
